# EUROPEAN PATENT SPECIFICATION

(11) **EP 1 962 562 B1**
(45) Date of publication and mention of the grant of the patent: **08.01.2014**
(21) Application number: 08250562.9
(22) Date of filing: 19.02.2008
(51) Int. Cl.: H05B 3/28, H05B 3/34, B29C 73/04

(54) **Comolete wire mesh repair with heat blanket**
Comolet-Drahtmaschenreparatur mit Wärmedecke
Réparation complète d'un treillis métallique avec une couverture chauffante

(30) Priority: 21.02.2007 US 709018
(43) Date of publication of application: 27.08.2008
(73) Proprietor: United Technologies Corporation, Hartford, CT 06101 (US)
(72) Inventor: Mayabb, Patrick B., Eaton Rapids, MI 48827 (US)
(74) Representative: Leckey, David Herbert

(56) References cited:
- US-A- 4 132 262
- US-A- 4 352 707
- US-A- 5 112 663
- US-A- 5 958 166

## Description

### BACKGROUND OF THE INVENTION

In modem aircraft, much of the surface of the aircraft is composed of advanced composite structures. Composite structures are often made from two main components: filaments (or fibers) and resins. The composites in the aerospace industry contain fibers that are characterized by high length to diameter ratios and near crystal sized diameters. The fibers are used to transmit loads within the composite structure. The resin binds the fibers together, and is often referred to as the "matrix". In addition to adding support for and transferring loads between the fibers, the resin also acts as an environmental protection for the structure(s) composed of the composite. The matrix has a lower density and strength than the fibers alone. The result of the matrix is a structural material that is characterized by high strength for its weight.

During operation of the aircraft, damage is experienced by the composite structures. The damage may be the result of one or more of three categories: impact damage, thermal damage, and component failure. Impact damage results from contact of the composites with foreign objects. The foreign objects may be the result of normal operation of the aircraft (i.e., ice or dirt and gravel contact the engine structure due to operation), or from careless maintenance (i.e., dropped tools while repairing the aircraft, hitting the aircraft with another vehicle such as a forklift or luggage cart). Most impact damages cause structural degradation that leaves a mark or footprint that can be detected upon visual inspection.

Excessive thermal exposure, especially to the engine case, also causes damage to composites. Over time, the composites of the engine casing will burn away the matrix leaving behind charred fibers or filaments. This can lead to delamination of the composites which can propagate to adjacent areas due to the weakened matrix. Thus, thermal damage repair is not limited to the specific area of visible damage. Damage may be inspected by radiographic (x-ray) inspection or ultrasonic inspection to find the extent of the damage. Such methods are non-destructive and thus minimize the need for additional repairs.

Component failure can be due to catastrophic failure of the laminates of the composites.. The failure is the result of numerous causes, such as improper design or improper use of the aircraft. Unanticipated or underestimated loads and stresses will result in component failure and require component replacement. This may be done by reinforcement of the component or remanufacture of the component. Again, the damage is found by non-destructive inspection.

To repair damaged composites, heat sources are often used to decrease the required cure time of resins. Currently, small impact damages or areas of thermal damage are repaired by utilizing small localized heat blankets. For major repairs, aircraft components, such as an engine casing, are removed and placed into an autoclave. This requires much added expense from the extra labor for removal of components. Thus, there is a need in the art for a quick and less expensive repair method for aircraft components that eliminates the need for removal of the component from the aircraft.

US-A-4352707 discloses a heating blanket comprising the features of the preamble of claim 1.

### BRIEF SUMMARY OF THE INVENTION

From a first aspect, the invention provides a heat blanket as claimed in claim 1. In one embodiment, the control apparatus has a plurality of temperature regulating devices, each of which corresponds to one of the plurality of heating zones. Each of the regulating devices is capable of setting an exclusive temperature for each respective zone associated with the temperature regulating devices.

In another aspect, the invention provides a method of repairing an engine cowl. First, a section of a composite material containing a defect is removed and replaced with new material containing substantially the same properties as the removed section. Next, a heat blanket with a plurality of controllable zones, and which covers substantially the entire thrust reverser is supplied. At least one of the plurality of controllable zones of the heat blanket has its temperature regulated from a common controller. The heat blanket is removed and a finishing process is applied to the replaced material.

### BRIEF DESCRIPTION OF THE DRAWINGS

FIG. 1 is a plan view of a gas turbine engine casing.
FIG. 2 is an exploded view of the gas turbine engine.
FIG. 3 is a perspective view of a heat blanket for use in the repair of a damaged thrust reverser.
FIG. 4 is a perspective view of another embodiment of a heat blanket for use in the repair of a damaged thrust reverser.

### DETAILED DESCRIPTION

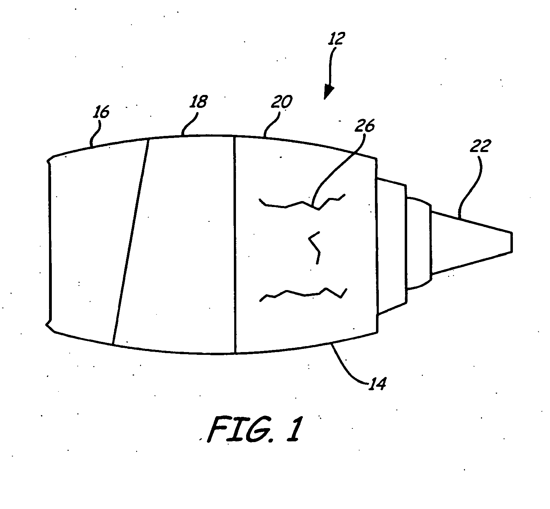

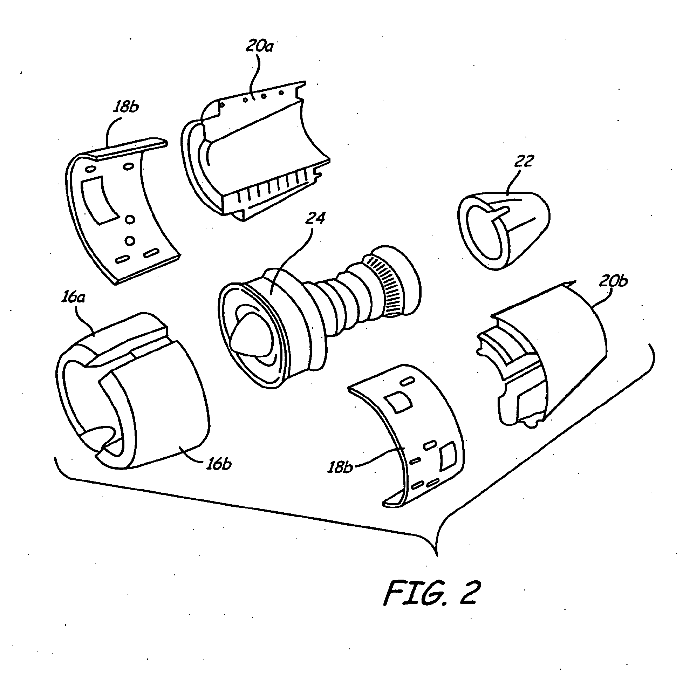

Figure 1 is a plan view of a gas turbine engine 12. Illustrated in Fig. 1 is a nacelle 14 having a forward inlet portion 16, middle cowl area 18, and thrust reverser 20. Nacelle 14 is constructed form a composite material. Also illustrated is exhaust nozzle 22. Nacelle 14 protects, supports, and allows mounting of engine 12 to an aircraft, and is an outer casing for a gas turbine engine. The majority of the nacelle 14 is constructed from composite material due to the weight versus strength ratio of the material. Figure 2 is an exploded view of the gas turbine engine 12. As shown, each portion of the nacelle has two individual halves, including inlet halves 16a and 16b, cowl halves 18a and 18b, and thrust reverser halves 20a and 20b. Also illustrated are interior engine 24 and exhaust nozzle 22. The individual components 16a-20b of nacelle 14 are secured together by fasteners.

Forward inlet portion 16 is smoothly contoured with the front containing a generally toroidal shape, which directs air into the engine. Forward inlet portion is constructed from metal, or a combination of metal and composite. The forward edge is metal because of potential damage from ground vehicles or debris from engine operation during takeoff and landing. Middle cowl area 18 covers the fan, compressor, and combustion portions of the engine. The multipiece cowl area 18 may contain hinged attachments, access doors, or removable panels that allow for maintenance and inspection of the aforementioned engine components. Middle cowl area 18 is constructed from composite material.

Thrust reverser 20 is generally conical, or contains a similar decreasing cross-sectional area towards the rear of the engine such as a quadratic surface. Thrust reverser 20 redirects the flow of exhaust from the engine back towards the engine to decelerate during landing of an aircraft. Thrust reverser 20 is constructed from composite. The composite is utilized for the nacelle components due to the light weight of the material compared to the strength of the material, as well as its resistance to high temperature. Thrust reverser 20 is constructed as a singular or two piece structure, compared to the multipiece structure of the middle cowl 18. This assures a strong, continuous surface for redirecting airflow.

Also illustrated in Fig. 1 are damage defects 26. Defects 26 cover a substantial portion of thrust reverser 20. Repairing wire mesh composites of thrust reversers presently requires all attachment hardware be removed from the core cowl. The entire thrust reverser is repaired as a single unit to assure structural integrity. The thrust reverser is removed, epoxy and fillers are applied, a vacuum is drawn over the repair, and then the entire part is placed into an autoclave. The cost of the process ranges upward from $15,000.00 due to replacement parts and several weeks of labor. The current invention includes a heat blanket that covers the entire thrust reverser and/or the outer portion of the nacelle. The blanket eliminates the need for removal of the thrust reverser from the engine or aircraft.

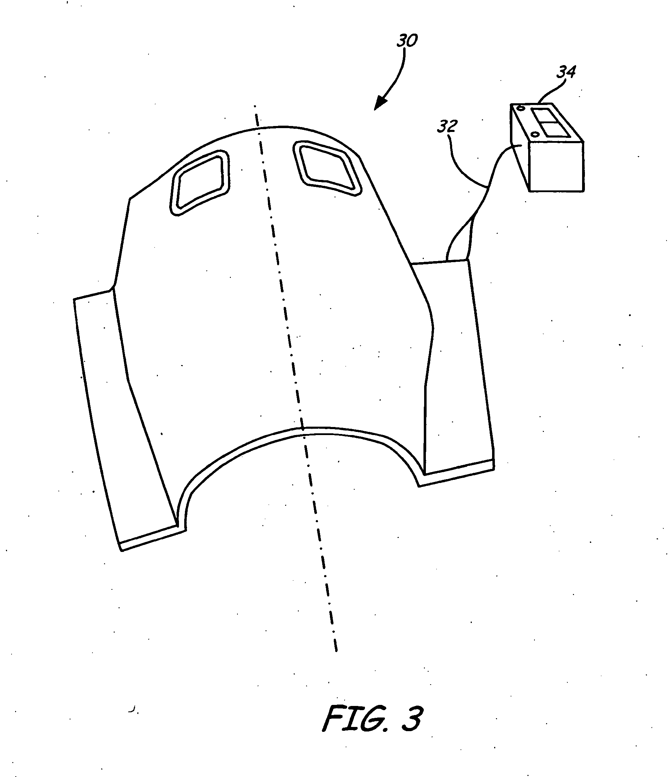

Figure 3 is a perspective view of heat blanket 30 for use in the repair of a damaged thrust reverser 20 of nacelle 14. Heat blanket 30 is constructed as is known by one of skill in the art. For example, heating blanket 30 may contain a series of flexible coil heating elements placed between thermally conductive layers, such as fiberglass reinforced silicone rubber sheets. Leads 32 extend from heating blanket 30 to control 34. Control 34 allows for regulating the temperature of heating blanket 30. Heat blanket 30 as illustrated is constructed to cover at least half of thrust reverser for example, thrust reverse half 20a, to assure that any repair is completely covered by a singular heating source. Heat blanket 30 contains a contour to create a tight fit about the general conical shape of thrust reverser 20.

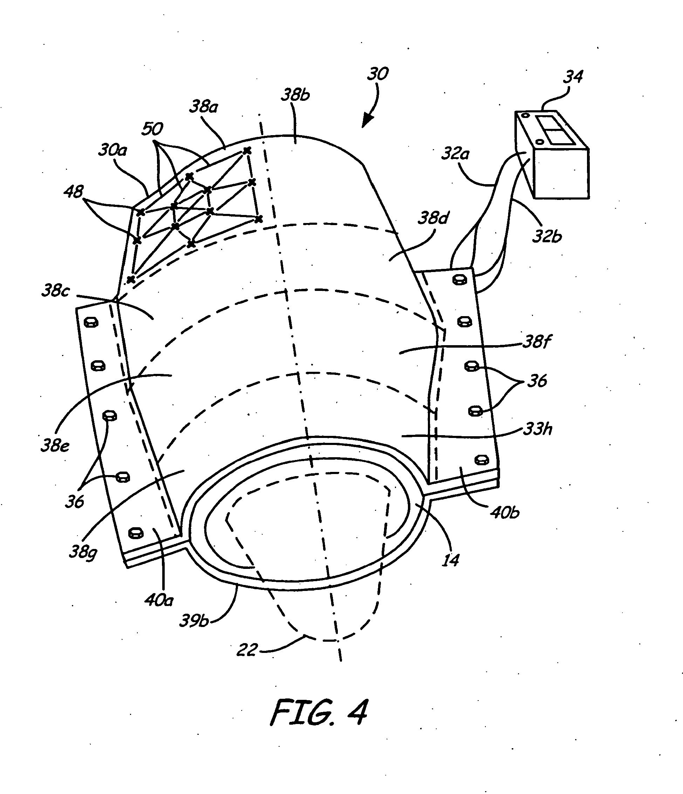

Figure 4 is a perspective view of another embodiment of heat blanket 30. Illustrated in Fig. 4 are heat blanket 30 with leads 32a and 32b and controller 34, thrust reverser 20, and exhaust nozzle 22. Heat blanket 30 contains an upper portion 30a and a lower portion 30b, with each portion 30a and 30b containing separate leads 32a and 32b. Leads 32a and 32b terminate at a common controller 34. Common controller 34 allows for regulation of the entire heat blanket 30 from a single source. The two portions 30a and 30b of heat blanket 30 are affixed together by fasteners 36. The two part construction promotes easy installation of blanket 30 about the contour of thrust reverser 20. As is apparent from Figure 4, the heat blanket 30 covers substantially the entire nacelle 14. Fasteners 36 are any item that can temporarily hold the two portions 30a and 30b relative to one another that are common in the art, and may include snaps, zippers or similar items. Fasteners 36 may be located in sections 40a and 40b of blanket 30 that do not contain heating elements.

Heat blanket 30 contains several separate heating zones 38. Upper portion 30a contains eight individual zones 38a-38h as illustrated in Fig. 4. Each heating zone contains its own controllable heating elements and thermocouples. The number of thermocouples and heating elements for each zone may vary, and need not be a one to one relation. For example, heating zone 38a may contain twelve thermocouples 48 and twenty-four heating elements 50. The thermocouples relay a temperature reading to controller 34 via leads 32. Controller 34 will compare this reading to a setting entered by a user and adjust the current to the heating elements as required, e.g. increasing current to increase the temperature of the zone or decrease the current to reduce the temperature. Controller 34 contains a separate adjustment means for each heating zone 38a-38h, as well as a master control for simultaneously controlling all zones to common temperature. Thus, if damage is located directly beneath zones 38a-38b and 38g-38h, controller 34 set so all zone settings are set to a common temperature, or so that only zones 38a-38b and 38g-38h are heating.

With the heating blanket 30 of the present invention, a repair can be done to fix damage 26 to the thrust reverser 20 of nacelle 14. First, an inspection is done to determine the extent and location of damage. Next, the area near the damage or defect is removed as necessary for creating a more uniform area in which to place filler material. Any protrusions into the repair area are removed. After the repair area has been cleaned of any stray material, an filler epoxy is placed in the damaged area. This is allowed to set, and then the area is again cleaned, such as by abraiding, to obtain a flush surface. Alternatively, the filler epoxy is a resin that does not require hardening and finishing prior to application of a patch, but is inserted to create a flush outer surface on the repair part. In one embodiment, a release film is placed adjacent the repair area to prevent the resin from the repair from adhering to the undamaged composite structure adjacent the repair.

After the repair area had been prepped as described, a patch of composite material is adhered to the area with a resin. The patch, is for example, fiber reinforced, such as with a wire mesh. The patch and resin together have essentially the same properties as the surrounding base material being repaired. Heating blanket 30 is then placed over thrust reverser 20.

A temperature is selected and set using controller 34 to apply heat over the repair area, and this is the temperature that heating blanket 30 must provide at its surface. Heating blanket 30 can be designed to provide a surface temperature of up to 250 degrees Celsius, with a deviation of plus or minus twenty degrees. To assure a proper cure and structurally sound repair, the temperature must be maintained. Often, the surface structure being repaired can at as a heat sink across the repair area. The contour design of heat blanket 30 assures that heat is provided to the entire surface covered by heat blanket 30, thus eliminating the problem of standard heating blankets which will not accommodate complex or contoured surfaces. Further, with separate controllable zones, heat blanket 30 can auto adjust smaller areas to compensate for difference in heat transfer due to the structure of thrust reverser 20. This counteracts the heat sink effect of any deviations in the surface of thrust reverser 20 to assure more even cure of the repair.

The time required for curing of the resin varies upon the resin used and temperature utilized in the repair. For example, a resin may take four hours to cure at a temperature of 177 degrees Celsius. During the cure, heating blanket 30 can maintain a surface temperature on the patch of a deviation of plus or minus 1 degrees Celsius. When applying the heat, the temperature is ramped up to the required temperature. A rapid application of heat may create structural deficiencies. Similarly, upon completing the cure, the temperature is ramped down to prevent cracks or other defects.

In an alternate embodiment, a vacuum is drawn over the repair are prior to heating. The vacuum drawn will provide a pressure difference over the repair. A flexible vacuum bag is positioned over the repair area, and sealed about its perimeter. A vacuum is then drawn to remove any air bubbles from the repaired area, and then heat is applied for curing the resin. Alternately, a vacuum bag is placed around the entire thrust reverser and heating blanket. A vacuum is drawn prior to heating the repair area. Application of a vacuum assures that any bubbles are removed from the repair area to ensure a solid bond of the resin to the existing part.

After repair area has been cured, heating blanket 30 is removed. A finishing process is done, if required, to achieve a smooth surface. Such finishing processes are known within the are including sanding or abrading of the repair area. The completed repair is inspected, tested using non-destructive techniques, and cleared for entry into service.

Although the present invention has been described with reference to several defined embodiments, workers skilled in the art will recognize that changes may be made in form and detail without departing from the scope of the invention.

## Claims

1. A heat blanket (30) for use in the repair of aircraft outer casings, the heat blanket (30) comprising;
an inner layer of thermally conductive material;
an outer layer of thermally conductive material;
a series of heating elements (50) between the inner and outer layers of materials, wherein the series of heating elements (50) are disposed into a plurality of heating zones (38a ... 38h); and
a control apparatus (34, 48) connected to the heating elements (50) to individually control temperature of each heating zone;
**characterised in that**:
the blanket (30) comprises at least two separate sections (30a, 30b), each section containing thermally conductive inner and outer layers covering heating elements (50), wherein each separate section is connected to the control apparatus (34) and is shaped to cover a portion of the engine nacelle; and by further comprising:
fasteners (36) for temporarily holding the separate sections (30a,30b) relative to one another to create a single heating area.

2. The heat blanket of claim 1 wherein the blanket (30) comprises at least four heating zones (38a... 38h).

3. The heat blanket of any preceding claim wherein the sections (30a, 30b) are capable of covering a quadratic surface.

4. The heat blanket of any preceding claim wherein the separate sections (30a, 30b) catch contain fasteners (36) to adjoin adjacent separate sections (30a, 30b) together to create a single heating area.

5. The heat blanket of claim 4 where the fasteners (36) are located on areas of each section that do not contain heating elements (50).

6. The heat blanket of any preceding claim wherein the heating blanket (30) is shaped to cover substantially the entire thrust reverser (20) of an engine (12).

7. The heat blanket of any preceding claim wherein the control apparatus comprises:
a plurality of temperature sensors (48); and
a controller (34) that provides power to the heating elements (50) as a function of temperatures sensed by the plurality of temperature sensors (48).

8. A method of repairing an engine nacelle (14), the method comprising:
removing a section of a composite material containing a defect;
replacing the removed section with new material containing substantially the same properties as the removed section;
supplying a heat blanket (30) with a plurality of individually controllable zones (38a .., 38h), the heat blanket (30) covering substantially the entire nacelle (14); and being comprised of at least two separate sections (30a, 30b) that are capable of being temporarily fastened together; regulating at least one of the plurality of controllable zones (38a ... 38h) of the heat blanket (30) to a specific temperature;
removing the heat blanket (30); and
applying a finishing process to the replaced material;
and wherein the step of supplying the heat blanket (30) includes temporarily fastening the separate sections (30a,30b) together around the nacelle (14).

9. The method of claim 8 wherein the heat blanket (30) is capable of maintaining a constant temperature in range of up to about 250 degrees Celsius.

10. The method of claim 8 or 9 wherein the heat blanket (30) contains a single controller (34) for regulating the plurality of controllable zones (38a ... 38h).

11. The method of any of claims 8 to 10 further comprising:
drawing a vacuum over the repair area.

12. The method of any of claims 8 to 11 wherein the respective heating zones (30a...38h) are regulated to a temperature of 177 degrees Celsius, plus or minus 1 degree Celsius.

## Patentansprüche

1. Hitzedecke (30) zur Verwendung bei der Reparatur von Außenschalen von Luftfahrzeugen, wobei Hitzedecke (30) aufweist:
eine innere Schicht aus Wärme leitendem Material;
eine äußere Schicht aus Wärme leitendem Material;
eine Serie von Heizelementen (50) zwischen der inneren und der äußeren Schicht des Materials, wobei die Serie von Heizelementen (50) in einer Vielzahl von Heizzonen (38a ... 38h) angeordnet sind; und
eine Steuer-/Regelvorrichtung (34, 48), die mit den Heizelementen (50) verbunden ist, um individuell die Temperatur einer jeden Heizzone zu steuern/regeln;
**dadurch gekennzeichnet, dass**:
die Decke (30) wenigstens zwei getrennte Bereiche (30a, 30b) aufweist, wobei jeder Bereich Wärme leitende innere und äußere Schichten enthält, die die Heizelemente (50) bedecken, wobei jeder getrennte Bereich mit der Steuer-/Regelvorrichtung (34) verbunden und so geformt ist, dass ein Bereich der Maschinengondel bedeckt ist; und weiterhin aufweisend:
Befestigungselemente (36) für das zeitweise Halten der getrennten Bereiche (30a, 30b) relativ zueinander, um einen einzigen Heizbereich zu schaffen.

2. Hitzedecke nach Anspruch 1, wobei die Decke (30) wenigstens vier Heizzonen (38a ... 38h) umfasst.

3. Hitzedecke nach einem der vorherigen Ansprüche, wobei die Bereiche (30a, 30b) eine quadratische Oberfläche bedecken können.

4. Hitzedecke nach einem der vorherigen Ansprüche, wobei die getrennten Bereiche (30a, 30b) jeweils Befestigungselemente (36) besitzen, um nebeneinander angeordnete getrennte Bereiche (30a, 30b) zu verbinden, um einen einzigen Heizbereich zu kreieren.

5. Hitzedecke nach Anspruch 4, wobei die Befestigungselemente (36) in Zonen eines Bereichs angeordnet sind, die keine Heizelemente (50) enthalten.

6. Hitzedecke nach einem der vorherigen Ansprüche, wobei die Hitzedecke (30) so gestaltet ist, dass sie im Wesentlichen den ganzen Schubumkehrer (20) eines Triebwerks (12) bedeckt.

7. Hitzedecke nach einem der vorherigen Ansprüche, wobei die Steuer-/Regelvorrichtung umfasst:
eine Vielzahl von Temperatursensoren (48); und
eine Steuerung/Regelung (34), die Energie für die Heizelemente (50) als eine Funktion von Temperaturen, die von der Vielzahl der Temperatursensoren (48) detektiert werden, bereitstellt.

8. Verfahren um eine Triebwerksgondel (14) zu reparieren, wobei dieses Verfahren umfasst:
Entfernen eines Bereichs von Verbundmaterial, das einen Defekt aufweist;
Ersetzen des entfernten Bereichs mit neuem Material, das im Wesentlichen die gleichen Eigenschaften wie der entfernte Bereich aufweist;
Bereitstellen einer Hitzedecke (30) mit einer Vielzahl von individuell steuer-/regulierbaren Zonen (38a ... 38h), wobei die Hitzedecke (30) im Wesentlichen die komplette Maschinengondel (14) bedeckt; und wenigstens zwei getrennte Bereiche (30a, 30b) umfasst, die zeitweilig miteinander verbunden werden können;
Ansteuern/Regeln wenigstens einer der Vielzahl der steuer-/regelbaren Bereiche (38a ... 38h) der Hitzedecke (30) zu einer spezifischen Temperatur;
Entfernen der Hitzedecke (30); und
Anwenden eines Endbearbeitungsprozesses auf das ausgetauschte Material;
und wobei der Schritt des Bereitstellens der Hitzedecke (30) zeitweises Befestigen der getrennten Bereiche (30a, 30b) zusammen um die Gondel (14) beinhaltet.

9. Verfahren nach Anspruch 8, wobei die Hitzedecke (30) es ermöglicht, eine konstante Temperatur in einem Bereich von bis zu 250 Grad Celsius aufrecht zu erhalten.

10. Verfahren nach Anspruch 8 oder 9, wobei die Hitzedecke (30) einen einzelne Steuerung/Regelung (34) beinhaltet, um die Vielzahl der steuer-/regelbaren Zonen (38a ... 38h) anzusteuern/einzuregeln.

11. Verfahren nach einem der Ansprüche 8 bis 10, weiterhin aufweisend:
Erzeugen eines Vakuums über dem Reparaturbereich.

12. Verfahren nach einem der Ansprüche 8 bis 11, wobei die jeweiligen Heizzonen (30a ... 38h) auf eine Temperatur von 177 Grad Celsius, plus oder minus 1 Grad Celsius, angesteuert/eingeregelt werden.

## Revendications

1. Couverture chauffante (30) pour usage dans la réparation d'enveloppes externes d'aéronefs, la couverture chauffante (30) comprenant :
une couche interne d'un matériau thermoconducteur ;
une couche externe d'un matériau thermoconducteur ;
une série d'éléments chauffants (50) entre les couches interne et externe de matériaux, dans laquelle la série d'éléments chauffants (50) est disposée dans une pluralité de zones chauffantes (38a, ..., 38h) ; et
un appareil de commande (34, 48) raccordé aux éléments chauffants (50) pour commander individuellement la température de chaque zone chauffante ;
**caractérisée en ce que** :
la couverture (30) comprend au moins deux sections séparées (30a, 30b), chaque section contenant des couches interne et externe thermoconductrices couvrant des éléments chauffants (50), dans laquelle chaque section séparée est raccordée à l'appareil de commande (34) et est conformée pour couvrir une partie de la nacelle du moteur ; et comprenant par ailleurs :
des éléments de fixation (36) pour maintenir momentanément les sections séparées (30a, 30b) l'une par rapport à l'autre afin de créer une seule zone chauffante.

2. Couverture chauffante selon la revendication 1, dans laquelle la couverture (30) comprend au moins quatre zones chauffantes (38a, ..., 38h).

3. Couverture chauffante selon l'une quelconque des revendications précédentes, dans laquelle les sections (30a, 30b) sont capables de couvrir une surface carrée.

4. Couverture chauffante selon l'une quelconque des revendications précédentes, dans laquelle les sections séparées (30a, 30b) contiennent chacune des éléments de fixation (36) pour joindre des sections séparées adjacentes (30a, 30b) l'une à l'autre afin de créer une seule zone chauffante.

5. Couverture chauffante selon la revendication 4, dans l'élément les éléments de fixation (36) sont situés sur des zones de chaque section qui ne contiennent pas d'éléments chauffants (50).

6. Couverture chauffante selon l'une quelconque des revendications précédentes, dans laquelle la couverture chauffante (30) est conformée pour couvrir sensiblement la totalité de l'inverseur de poussée (20) d'un moteur (12).

7. Couverture chauffante selon l'une quelconque des revendications précédentes, dans laquelle l'appareil de commande comprend :
une pluralité de capteurs de température (48) ; et
un dispositif de commande (34) qui fournit de l'énergie aux éléments chauffants (50) en fonction des températures détectées par la pluralité de capteurs de température (48).

8. Procédé de réparation d'une nacelle de moteur (14), le procédé comprenant les étapes consistant à :
retirer une section d'un matériau composite contenant un défaut ;
remplacer la section retirée par un nouveau matériau ayant sensiblement les mêmes propriétés que la section retirée ;
fournir une couverture chauffante (30) avec une pluralité de zones (38a, ..., 38h) qui peuvent être commandées individuellement, la couverture chauffante (30) couvrant sensiblement toute la nacelle (14) ; et qui sont constituées d'au moins deux sections séparées (30a, 30b) qui sont à même d'être fixées l'une à l'autre momentanément ;
réguler au moins l'une de la pluralité de zones (38a, ..., 38h) commandables de la couverture chauffante (30) à une température spécifique ;
retirer la couverture chauffante (30) ; et
appliquer un processus de finition au matériau remplacé ; et
dans lequel l'étape d'alimentation de la couverture chauffante (30) comprend la fixation momentanée des sections séparées (30a, 30b) conjointement autour de la nacelle (14).

9. Procédé selon la revendication 8, dans lequel la couverture chauffante (30) est à même de maintenir une température constante dans la plage allant jusqu'à environ 250 degrés Celsius.

10. Procédé selon la revendication 8 ou la revendication 9, dans lequel la couverture chauffante (30) contient un seul dispositif de commande (34) pour réguler le pluralité de zones commandables (38a, ..., 38h).

11. Procédé selon l'une quelconque des revendications 8 à 10, comprenant en outre :
l'application d'un vide sur la zone de réparation.

12. Procédé selon l'une quelconque des revendications 8 à 11, dans lequel les zones chauffantes respectives (30a, ..., 38h) sont réglées à une température de 177 degrés Celsius, plus ou moins 1 degré Celsius.
